# EUROPÄISCHE PATENTANMELDUNG

(11) **EP 2 071 183 A2**
(43) Veröffentlichungstag der Anmeldung: **17.06.2009**
(21) Anmeldenummer: 08171462.8
(22) Anmeldetag: 12.12.2008
(51) Int. Cl.: F03G 1/00

(54) **Federmotor**

(30) Priorität: 12.12.2007 DE 102007060315
(71) Anmelder: VKR Holding A/S, 2970 Hørsholm (DK)
(72) Erfinder: Tants, Guido, 27632 Midlum (DE)
(74) Vertreter: von Ahsen, Erwin-Detlef

(57) **Zusammenfassung**

Die Erfindung betrifft einen Federmotor, insbesondere für eine bedienschnurlose Verschattungsanlage, mit einer ersten Federeinheit (29; 34) bestehend aus einer Konstantkraftfeder (11), einer Federachse (12), einer Federaufnahme (18) und einem Gehäuse (20), wobei die erste Federeinheit (29; 34) mittels einer Kupplungseinrichtung mit mindestens einer zweiten Federeinheit (30, 31; 33) verbindbar ist, und die Federeinheiten (29, 30, 31; 33, 34), insbesondere zum Verlängern des Federweges und/oder zum Erreichen eines konstanten Drehmomentes, in Reihe geschaltet sind.

## Beschreibung

Die Erfindung betrifft einen Federmotor, insbesondere für eine bedienschnurlose Verschattungsanlage, mit einer ersten Federeinheit, bestehend aus einer Konstantkraftfeder, einer Federachse, einer Federaufnahme und einem Gehäuse, wobei die erste Federeinheit mittels einer Kupplungseinrichtung mit mindestens einer zweiten Federeinheit verbindbar ist.

Ein derartiger Federmotor ist aus der DE 695 33 883 T2 bekannt. Hierbei umfasst eine Federeinheit eine Speichertrommel, die eine Konstantkraftfeder in der Form eines Federstreifens mit einer vorgegebenen Länge aufweist und mit einer Abgabetrommel verbunden ist. Mehrere Federeinheiten können mittels einer Stange gekoppelt werden. Durch diese Parallelschaltung der Federeinheiten sollen kleine Abweichungen bei den Federkräften ausgeglichen und ein gleichmäßiges Aufwickeln der Schnüre gewährleistet werden.

Hierbei ist von Nachteil, dass bei der Verwendung eines solchen Federmotors, beispielsweise für eine bedienschnurlose Verschattungsanlage, die Anlagenhöhe durch die Länge der Konstantkraftfeder vorgegeben ist. Für unterschiedliche Anlagenhöhen müssen die Federeinheiten daher mit Federn entsprechender Länge versehen werden. Somit müssen für Verschattungsanlagen mit unterschiedlichen Anlagenhöhen jeweils geeignete Federeinheiten, die eine Feder mit einer passenden Federlänge aufweisen, vorgehalten werden. Nachteilig ist hierbei der erhöhte Montage- und Bevorratungsaufwand sowie der daraus resultierende Kostenaufwand.

Des Weiteren ist von Nachteil, dass sich mittels der bekannten Parallelschaltung von Federeinheiten lediglich eine Kraftverstärkung erreichen lässt. Jedoch ist gerade für bedienschnurlose Verschattungsanlagen weniger eine hohe Kraftwirkung der Federeinheiten von Bedeutung, als vielmehr ein konstantes Drehmoment. Dieses ist die Voraussetzung für eine zuverlässige Stoppfunktion der Verschattungsanlage in jeder möglichen Lage. Die Stoppfunktion bzw. das Halten beispielsweise eines Plissees oder einer Jalousie in einer beliebigen Stellung zwischen zwei Endanschlägen ergibt sich aus einem Gleichgewicht zwischen der Federkraft, dem Behanggewicht und der Reibung durch Schnurumlenkungen in der Verschattungsanlage.

Hiervon ausgehend liegt der Erfindung das Problem zugrunde, einen Federmotor der eingangs genannten Art derart weiterzuentwickeln, dass der Federmotor auf einfache Weise auf unterschiedliche Federweglängen einstellbar ist und dass ein möglichst konstantes Drehmoment über die gesamte Federweglänge anliegt.

Zur Lösung des der Erfindung zugrunde liegenden Problems gibt diese einen Federmotor der eingangs genannten Art an, wobei die Federeinheiten, insbesondere zum Verlängern des Federweges und/oder zum Erreichen eines konstanten Drehmomentes, in Reihe geschaltet sind.

Hierbei ist von Vorteil, dass der Federmotor auf einfache Weise für die jeweils benötigte Federlänge angepasst werden kann. So ist der Federmotor für die Verwendung in Verschattungsanlagen mit unterschiedlichen Anlagenhöhen geeignet. Zur Anpassung an die jeweilige Anlagenhöhe wird lediglich die notwendige Anzahl an Federeinheiten in Reihe geschaltet. Des Weiteren ist von Vorteil, dass durch die Kopplung der Federeinheiten in Reihe ein besonders konstantes Drehmoment an der Wickelwelle realisiert wird. Hierdurch kann eine zuverlässige Stoppfunktion der Verschattungsanlage in jeder möglichen Position gewährleistet werden. Zudem wird die Montage bei der Installation der Verschattungsanlage erleichtert, da aufgrund der sehr konstanten Federkraft keine Beschwerungen vorgesehen werden müssen.

Entsprechend einer Weiterbildung des Federmotors ist die Drehachse der zweiten Federeinheit in axialer Verlängerung zur Drehachse der ersten Federeinheit angeordnet. Hierbei ist von Vorteil, dass auch bei einer Reihenschaltung von mehreren Federeinheiten ein sehr kompakter und damit raumsparender Federmotor realisierbar ist.

Nach einer weiteren vorteilhaften Ausführungsform ist die Konstantkraftfeder der zweiten Federeinheit gleichzeitig mit der Auslenkbewegung der Konstantkraftfeder der ersten Federeinheit zum Überlagern der Federkräfte beider Konstantkraftfeder gespannt. Somit ist durch die Reihenschaltung der Federeinheiten nicht nur eine Verlängerung des Federweges, sondern auch eine vorteilhafte Überlagerung der Federkräfte erreichbar. Durch die Kopplung der Federeinheiten ergibt sich beispielsweise an der Wickelwelle einer Verschattungsanlage bei gleich bleibender Bedienhöhe und damit gleich bleibender benötigter Federweglänge ein besonders konstantes Drehmoment. Hierbei ist von Vorteil, dass eine sehr konstante Federkraft des Federmotors realisierbar ist und geringe Schwankungen der Federkräfte der einzelnen Federeinheiten zugleich auf einfache Weise ausgeglichen werden.

Entsprechend einer Weiterbildung ist die Kupplungseinrichtung als eine drehfeste Steckverbindung mit einem ersten, insbesondere polygonen, Kupplungselement und einem zweiten korrespondierenden Kupplungselement ausgebildet. Hierdurch sind die Federeinheiten auf sehr einfache und schnelle Weise miteinander in Reihe schaltbar, wodurch der Montageaufwand erheblich reduziert wird. Durch das Vorsehen einer drehfesten Steckverbindung sind keine weiteren Montageschritte, wie beispielsweise das Durchführen einer Schraub- oder Klebverbindung oder dergleichen, notwendig. Das erste Kupplungselement kann beispielsweise als ein hervorstehender Mehrkant ausgebildet sein, während das zweite Kupplungselement als eine entsprechende mehrkantige Vertiefung ausgebildet ist. Darüber hinaus ist noch eine Vielzahl an weiteren möglichen Steckverbindungen, wie sie aus dem Stand der Technik bekannt sind, denkbar.

Nach einer weiteren vorteilhaften Ausführungsform ist in den Federeinheiten jeweils ein erstes Ende der Konstantkraftfeder mit der Federachse fest verbindbar ist und ein zweites Ende der Konstantkraftfeder mit der Federaufnahme fest verbindbar. Somit sind die Endpunkte der Konstantkraftfeder eindeutig definiert. Vorteilhafterweise ist die Konstantkraftfeder auf der Federachse angeordnet, ist die Federachse um die Federweglänge verdrehbar mit der, insbesondere zylinderförmigen, Federaufnahme verbunden und ist die Federaufnahme innerhalb des Gehäuses verdrehbar gelagert. Hierbei ist von Vorteil, dass die Konstantkraftfeder während des Betriebes des Federmotors nur einer Federachse zugeordnet ist und innerhalb der zugehörigen Federaufnahme verbleibt. Das Vorsehen einer weiteren Aufnahme-, Abgabe- oder Speichertrommel ist somit nicht notwendig. Dies führt zu einer erheblichen Raumersparnis, wodurch ein kompakterer Federmotor realisierbar ist.

Im Betrieb verdreht sich die Federachse um die Federweglänge, wobei auf die Federachse die Federkraft der Konstantkraftfeder wirkt. Sobald die Federachse um die maximale Federweglänge verdreht worden ist, wird mit einem weiteren Verdrehen der Federachse und der daran verbundenen Konstantkraftfeder, die nun maximal gespannt ist, die Federaufnahme in eine Drehbewegung innerhalb des Gehäuses versetzt. Die Drehbewegung der Federaufnahme kann an eine zweite in Reihe geschaltete Federeinheit weitergegeben werden.

Entsprechend einer vorteilhaften Ausführungsform ist die Lage der Federaufnahme mittels eines Arretierstiftes verdrehfest zum Gehäuse fixierbar. Hierdurch wird ein Verdrehen der Federaufnahme innerhalb des Gehäuses auf einfache und effektive Weise verhindert. Vorzugsweise ist bei der Reihenschaltung von Federeinrichtungen mittels der Kupplungseinrichtung lediglich bei der letzten Federeinrichtung in der Reihe die Federaufnahme mittels des Arretierstiftes verdrehfest zum Gehäuse fixiert. Somit können die ersten Federeinheiten nach dem Zurücklegen der maximalen Federweglänge ihrer jeweiligen Konstantkraftfedern die weitere Drehbewegung beispielsweise einer Getriebeachse oder Wickelwelle über die Verdrehung der Federaufnahme an die nachgeschaltete Federeinheit weitergeben. Mittels der Arretierung der letzten Federeinheit in der Reihe wird die Gesamtfederlänge des Federmotors festgelegt, da ein Verdrehen der Federaufnahme der letzten Federeinheit in der Reihe durch den Arretierstift verhindert wird.

Vorzugsweise ist der Arretierstift mittels einer, insbesondere zweier, am Gehäuse angeordneter Klemmnasen festklemmbar. Hierdurch ist eine besonders einfache und schnelle Arretierung der Federaufnahme realisierbar, wobei keine zusätzlichen Verbindungsmittel, wie beispielsweise Schrauben, Nägel oder dergleichen, notwendig sind. Darüber hinaus können die Klemmnasen einer ersten Federeinheit in entsprechend ausgestaltete Klemmschlitze einer hierzu in Reihe geschalteten zweiten Federeinheit eingreifen, wodurch die Federeinheiten bei einer Reihenschaltung fest miteinander verbunden sind. Hierbei können die Klemmnasen durch Positionierungsstifte ergänzt werden, wobei die Positionierungsstifte einer ersten Federeinheit in entsprechende Öffnungen einer zweiten in Reihe geschalteten Federeinheit einführbar sind.

Von besonderem Vorteil ist eine bedienschnurlose Verschattungsanlage, insbesondere Plissee oder Jalousie, mit einem erfindungsgemäßen Federmotor sowie die Verwendung eines erfindungsgemäßen Federmotors zum Betätigen einer bedienschnurlosen Verschattungsanlage, insbesondere Plissee oder Jalousie.

Nachfolgend wird die Erfindung anhand von Ausführungsbeispielen mittels der folgenden Zeichnungen näher erläutert. Es zeigen:
- Fig. 1: eine perspektivische Explosionsdarstellung einer Federeinheit eines erfindungsgemäßen Federmotors,
- Fig. 2: eine perspektivische Schnittdarstellung dreier Federeinheiten eines erfindungsgemäßen Federmotors, und
- Fig. 3: eine geschnittene Seitenansicht eines erfindungsgemäßen Federmotors mit zwei Federeinheiten.

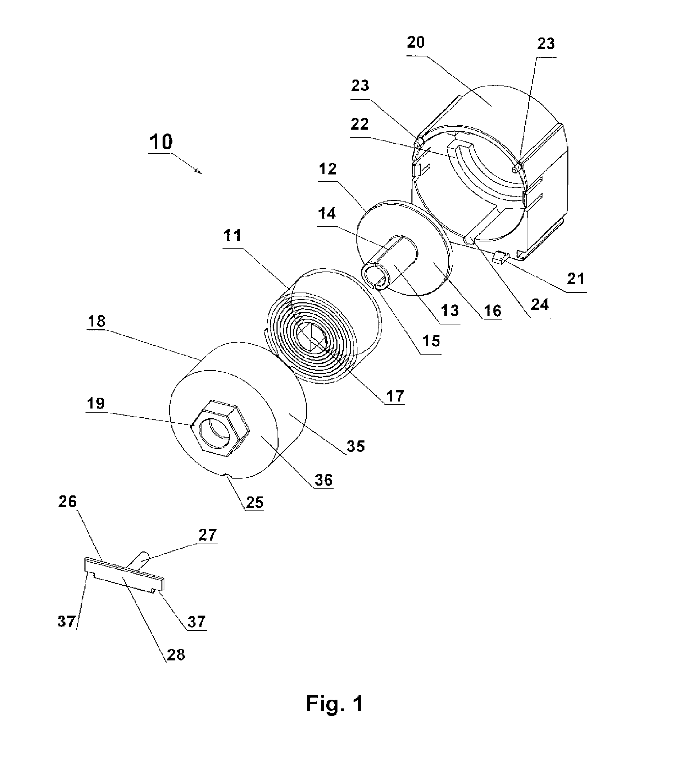

Fig. 1 zeigt die Bestandteile einer Federeinheit 10. Die Federeinheit 10 besteht zunächst aus einer Konstantkraftfeder 11 und einer Federachse 12. Die Federachse 12 weist einen zylinderförmigen Achsabschnitt 13 auf, der in Längsrichtung einen durchgehenden Schlitz 14 und diesem gegenüberliegend einen weiteren Schlitz 15 aufweist. Der Achsabschnitt 13 ist mittig auf einer kreis- und scheibenförmigen Federauflage 16 angeordnet. Die Schlitze 14, 15 dienen zur Aufnahme eines Federendes 14 der Konstantkraftfeder 11.

Des Weiteren weist die Federeinheit 10 eine Federaufnahme 18 auf. Diese besteht aus einer zylinderförmigen Mantelfläche 35, deren Innenmaße zur Aufnahme der Konstantkraftfeder 11 geeignet sind. Eine Abdeckscheibe 36 weist mittig ein Kupplungselement 19 auf, welches hier als ein vorstehender Sechskant ausgebildet ist.

Ein im Wesentlichen zylinderförmiges Gehäuse 20 nimmt die Federaufnahme 18 mit samt der Konstantkraftfeder 11 und der Federachse 12 auf. Das Gehäuse 20 weist zwei Klemmnasen 21 auf, wobei in dieser Darstellung nur eine Klemmnase 21 erkennbar ist. Ferner weist das Gehäuse 20, Anschläge 22 und Positionierungsstifte 23 auf.

Eine Gehäusenut 24 und eine Federaufnahmenut 25 sind geeignet, einen Steckstift 27 eines Arretierstiftes 26 aufzunehmen. Auf dem Steckstift 27 des Arretierstiftes 26 ist eine Fixierplatte 28 derart angeordnet, dass sich für den Arretierstift 26 im Wesentlichen eine T-Form ergibt. Die Fixierplatte 28 weist an sich gegenüberliegenden Ecken Einkerbungen 37 auf.

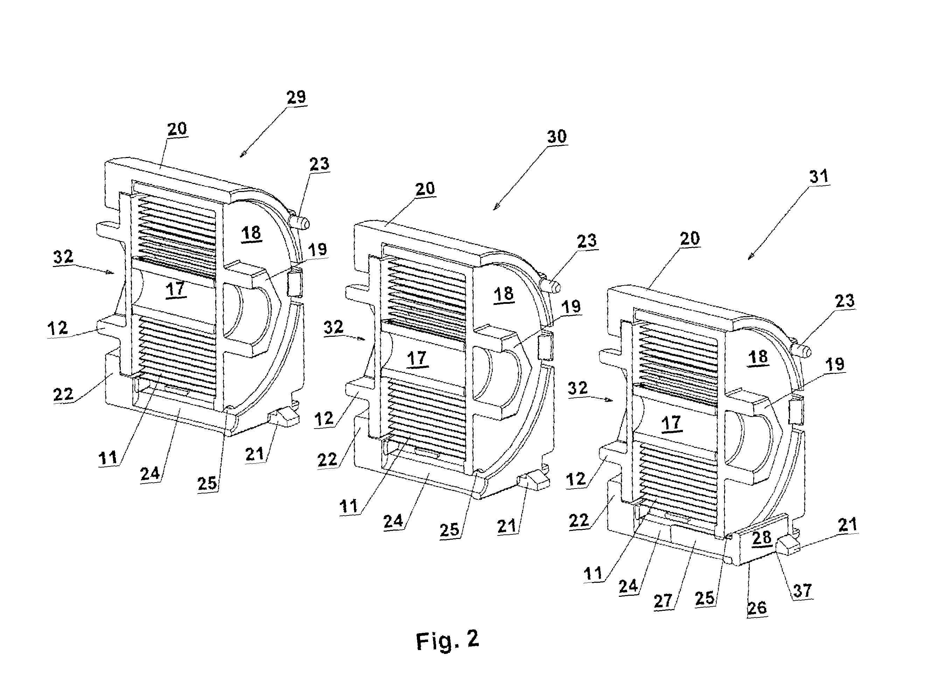

Fig. 2 zeigt Federeinheiten 29, 30 und 31, deren Bestandteile denen der Federeinheit 10 gemäß Fig. 1 entsprechen, so dass gleiche Bestandteile die gleichen Bezugszeichen tragen. Die Konstantkraftfedern 11 sind mittig auf der Federachse 12 angeordnet. Des Weiteren sind die Konstantkraftfedern 11 und die Federachsen 12 innerhalb der Federaufnahme 18 angeordnet. Der Verbund von Konstantkraftfeder 11, Federachse 12 und Federaufnahme 18 ist wiederum innerhalb eines Gehäuses 20 angeordnet. Die Federachsen 12 weisen auf der dem Achsabschnitt 13 abgewandten Seite der Federauflage 16 ein Kupplungselement 32 auf. Dieses Kupplungselement 32 ist entsprechend des Kupplungselementes 19 als ein nach innen gewölbter Sechskant ausgebildet.

Die Federaufnahmen 18 der Federeinheiten 29 und 30 sind jeweils drehbar innerhalb des Gehäuses 20 gelagert. Dagegen ist die Federaufnahme 18 der Federeinheit 31 aufgrund eines Arretierstiftes 26 zum Gehäuse verdrehfest fixiert. Hierbei füllt der Steckstift 27 des Arretierstiftes 26 die Gehäusenut 24 und die Federaufnahmenut 25 in ihrem Umfang vollständig aus. Die Fixierplatte 28 und somit der Arretierstift 26 wird durch die Klemmnasen 21 am Gehäuse 20 gehalten. Die Einkerbungen 37 ermöglichen das Hineindrücken des Arretierstiftes 26 in seine Fixierstellung. Somit sind die drei Federeinheiten 29, 20, 31 zu einem Federmotor zusammenfassbar, in dem die Federeinheiten 29, 30, 31 in Reihe geschaltet werden.

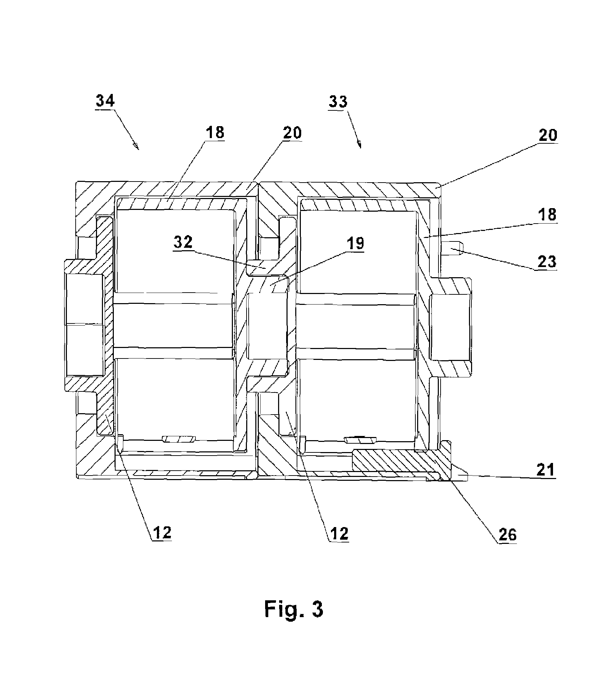

Fig. 3 zeigt zwei Federeinheiten 33 und 34, welche gemäß des erfindungsgemäßen Federmotors in Reihe geschaltet sind. Hierbei sind aus Gründen der Übersichtlichkeit die Konstantkraftfedern 11 nicht dargestellt. Das Kupplungselement 19 der Federeinheit 34 greift formschlüssig in das Kupplungselement 32 der Federeinheit 33 ein, wodurch eine verdrehfeste Steckverbindung zwischen den Federaufnahmen 18 der beiden Federeinheiten 33, 34 entsteht. Hierbei ist die Federaufnahme 18 der Federeinheit 34 verdrehbar zum Gehäuse 20 gelagert. Dagegen ist bei der Federeinheit 33 ein Arretierstift 26 vorgesehen, so dass die Federaufnahme 18 der Federeinheit 33 gegenüber dem Gehäuse 20 der Federeinheit 33 verdrehfest fixiert ist.

Im Folgenden wird die Funktionsweise des erfindungsgemäßen Federmotors anhand der Fig. 3 näher erläutert.

Soll der Federweg eines Federmotors verlängert und/oder ein konstanteres Drehmoment beziehungsweise eine sehr konstante Federkraft erreicht werden, so kann eine erste Federeinheit 34 durch eine zweite Federeinheit 33 ergänzt werden. Hierzu werden zwei gleichartig aufgebaute Federeinheiten 33, 34 hintereinander in Reihe geschaltet. Die Gehäuse 20 der Federeinheiten 33, 34 werden derart aneinander gefügt, dass das Kupplungselement 19 der Federeinheit 34 in das Kupplungselement 32 der Federeinheit 33 eingreift, wodurch eine verdrehfeste Steckverbindung zwischen der Federaufnahme 18 der Federeinheit 34 und der Federachse 12 der Federeinheit 33 entsteht. Die Federaufnahme 18 der Federeinheit 33 wird verdrehfest zum Gehäuse 20 der Federeinheit 33 fixiert, in dem ein Steckstift 27 eines Arretierstiftes 26 in eine durch die Gehäusenut 24 und Federaufnahmenut 25 gemeinsam gebildete Aufnahme eingeführt ist. Der Arretierstift 26 wird durch Klemmnasen 21 am Gehäuse 20 der Federeinheit 33 gehalten.

Entsprechende Klemmnasen 21 der Federeinheit 34 sind in entsprechende Positionierungsschlitze der Federeinheit 33 aufgenommen. Ebenso werden Positionierungsstifte 23 der Federeinheit 34 in entsprechend geeignet ausgeformte Positionierungslöcher an der Federeinheit 33 eingeführt. Hierdurch ist eine feste Verbindung der Federeinheiten 33, 34 gewährleistet.

Wird nun die Federachse 12 der Federeinheit 34 in eine Drehbewegung versetzt, so wirkt auf eine beispielsweise mit der Federeinheit 34 verbundene Wickelwelle eine überlagerte Federkraft der Konstantkraftfeder der beiden Federeinheiten 33, 34. Die Federachse 12 der Federeinheit 34 kann nun solange verdreht werden, wie es die Federlänge der Konstantkraftfeder der Federeinheit 34 zulässt. Nach maximaler Auslenkung der Konstantkraftfeder der Federeinheit 34 wird bei einer weiteren Verdrehung der Federachse 12 die Federaufnahme 18 der Federeinheit 34 in eine Drehbewegung versetzt. Da die Federaufnahme 18 der Federeinheit 34 jedoch mit der Federachse 12 der Federeinheit 33 verdrehfest verbunden ist, wird hierdurch zugleich die Federaufnahme 12 der Federeinheit 33 in eine Drehbewegung versetzt. Hierdurch kann nun eine weitere Verdrehung in Abhängigkeit der Federweglänge der Konstantkraftfeder der Federeinheit 33 erfolgen. Wird nun die maximale Auslenkung der Konstantkraftfeder der Federeinheit 33 erreicht, ist zugleich die maximale Gesamtfederlänge des Federmotors erreicht, da die Federaufnahme 18 der Federeinheit 33 durch den Arretierstift 26 gegenüber dem Gehäuse 20 fixiert ist.

Somit ist es mittels des erfindungsgemäßen Federmotors möglich, unterschiedliche Federweglängen und/oder das Erreichen eines konstanten Drehmomentes durch eine Reihenschaltung zweier oder mehrerer Federeinheiten auf einfache Weise zu erhalten.

### Bezugszeichenliste:

- 10: Federeinheit
- 11: Konstantkraftfeder
- 12: Federachse
- 13: Achsabschnitt
- 14: Schlitz
- 15: Schlitz
- 16: Federauflage
- 17: Federende
- 18: Federaufnahme
- 19: Kupplungselement
- 20: Gehäuse
- 21: Klemmnase
- 22: Anschlag
- 23: Positionierungsstift
- 24: Gehäusenut
- 25: Federaufnahmenut
- 26: Arretierstift
- 27: Steckstift
- 28: Fixierplatte
- 29: Federeinheit
- 30: Federeinheit
- 31: Federeinheit
- 32: Kupplungselement
- 33: Federeinheit
- 34: Federeinheit
- 35: Mantelfläche
- 36: Abdeckscheibe
- 37: Einkerbung

## Patentansprüche

1. Federmotor, insbesondere für eine bedienschnurlose Verschattungsanlage, mit einer ersten Federeinheit (29; 34) bestehend aus einer Konstantkraftfeder (11), einer Federachse (12), einer Federaufnahme (18) und einem Gehäuse (20), wobei die erste Federeinheit (29; 34) mittels einer Kupplungseinrichtung mit mindestens einer zweiten Federeinheit (30, 31; 33) verbindbar ist, **dadurch gekennzeichnet, dass** die Federeinheiten (29, 30, 31; 33, 34), insbesondere zum Verlängern des Federweges und/oder zum Erreichen eines konstanten Drehmomentes, in Reihe geschaltet sind.

2. Federmotor nach Anspruch 1, **dadurch gekennzeichnet, dass** die Drehachse der zweiten Federeinheit (30, 31; 33) in axialer Verlängerung zur Drehachse der ersten Federeinheit (29; 34) angeordnet ist.

3. Federmotor nach Anspruch 1 oder 2, **dadurch gekennzeichnet, dass** die Konstantkraftfeder (11) der zweiten Federeinheit (30, 31; 33) gleichzeitig mit der Auslenkbewegung der Konstantkraftfeder der ersten Federeinheit (29; 34) zum Überlagern der Federkräfte beider Konstantkraftfedern (11), gespannt ist.

4. Federmotor nach einem der vorhergehenden Ansprüche, **dadurch gekennzeichnet, dass** die Kupplungseinrichtung als eine drehfeste Steckverbindung mit einem ersten, insbesondere Polygonen, Kupplungselement (19) und einem zweiten korrespondierenden Kupplungselement (32) ausgebildet ist.

5. Federmotor nach einem der vorhergehenden Ansprüche, **dadurch gekennzeichnet, dass** in den Federeinheiten (29, 30, 31; 33, 34) jeweils ein erstes Ende der Konstantkraftfeder (11) mit der Federachse (12) fest verbindbar ist und ein zweites Ende der Konstantkraftfeder (11) mit der Federaufnahme (18) fest verbindbar ist.

6. Federmotor nach einem der vorhergehenden Ansprüche, **dadurch gekennzeichnet, dass** die Konstantkraftfeder (11) auf der Federachse (12) angeordnet ist, dass die Federachse (12) um die Federweglänge verdrehbar mit der, insbesondere zylinderförmigen, Federaufnahme (18) verbunden ist, und dass die Federaufnahme (18) innerhalb des Gehäuses (20) verdrehbar gelagert ist.

7. Federmotor nach einem der vorhergehenden Ansprüche, **dadurch gekennzeichnet, dass** die Lage der Federaufnahme (18) mittels eines Arretierstiftes (26) verdrehfest zum Gehäuse (20) fixierbar ist.

8. Federmotor nach Anspruch 7, **dadurch gekennzeichnet, dass** bei der Reihenschaltung von Federeinrichtungen (29, 30, 31; 33, 34) mittels der Kupplungseinrichtung lediglich bei der letzten Federeinrichtung (31; 33) in der Reihe die Federaufnahme (18) mittels des Arretierstiftes (26) verdrehfest zum Gehäuse (20) fixiert ist.

9. Federmotor nach Anspruch 7 oder 8, **dadurch gekennzeichnet, dass** der Arretierstift (26) mittels einer, insbesondere zweier, am Gehäuse (20) angeordneter Klemmnasen (21) festklemmbar ist.

10. Bedienschnurlose Verschattungsanlage, insbesondere Plissee oder Jalousie, mit einem Federmotor nach einem der vorhergehenden Ansprüche.

11. Verwendung eines Federmotors nach einem der Ansprüche 1 bis 9 zum Betätigen einer bedienschnurlosen Verschattungsanlage, insbesondere Plissee oder Jalousie.
